# EUROPÄISCHE PATENTSCHRIFT

(11) **EP 1 081 413 B1**
(45) Veröffentlichungstag und Bekanntmachung des Hinweises auf die Patenterteilung: **06.11.2002**
(21) Anmeldenummer: 00117055.4
(22) Anmeldetag: 09.08.2000
(51) Int. Cl.: F16H 7/12

(54) **Spannvorrichtung für einen Hülltrieb, insbesondere Riementrieb für Nebenaggregate an Brennkraftmaschinen**
Tensioning device for a transmission with endless flexible member, in particular belt transmission for auxiliaries of an internal combustion engine
Dispositif de tension pour une transmission à organe flexible sans fin, en particulier une transmission à courroie pour les appareils auxiliaires d'un moteur à combustion interne.

(30) Priorität: 28.08.1999 DE 19940963
(43) Veröffentlichungstag der Anmeldung: 07.03.2001
(73) Patentinhaber: Bayerische Motoren Werke Aktiengesellschaft, 80809 München (DE)
(72) Erfinder: Kutscha, Markus, 4451 Gansten (AT)

(56) Entgegenhaltungen:
- EP-A- 0 407 261
- DE-C- 3 642 430
- DE-U- 29 520 940
- US-A- 4 530 682
- SIGMUND RAPPAPORT: "16 Latch, Toggle and Trigger Devices " PRODUCT ENGINEERING, Bd. 20, Nr. 5, Mai 1957 (1957-05), Seiten 200-201, XP002181258

## Beschreibung

Die Erfindung bezieht sich nach dem Oberbegriff des Patentanspruches 1 auf eine Spannvorrichtung für einen Hülltrieb, insbesondere Riementrieb für Nebenaggregate an Brennkraftmaschinen, umfassend einen maschinenfest schwenkbar angeordneten Spannhebel, der zur Einwirkung auf das Zugmittel des Hülltriebes ein Spannteil trägt und der ferner mit einer Betätigungsstange eines maschinenfest schwenkbar angeordneten Kraftspeichers gelenkig verbunden ist.

Eine derartige Spannvorrichtung ist beispielsweise aus der DE-C 36 42 430 bekannt. Diese Spannvorrichtung ist so gestaltet, dass sie in der einen Position die Anordnung des Riemens erleichtert durch eine entfernte Stellung der Spannrolle, und dass sie bei aufgelegtem Riemen in Spannposition zu bringen ist. Hierfür ist der schwenkbare Kraftspeicher an einem gesonderten Hilfshebel schwenkbeweglich angeordnet, wobei der Hilfshebel mittels eines ersten Werkzeuges in die Spannposition gedreht wird und zur Sicherung der Spannposition der Hilfshebel mittels eines weiteren Werkzeuges durch Klemmen lagegesichert wird. Der Werker ist hierbei gehalten, die Spannvorrichtung beidhändig in Position zu bringen und zu sichern.

Weiter ist aus der DE-C 39 42 383 eine Spannvorrichtung bekannt, bei der eine federbelastete Betätigungsstange eines Kraftspeichers gegen die Federwirkung zurückgezogen und am Ausfahren in Richtung Spannposition durch einen Stopp- Stift gehindert wird.

Der Erfindung liegt die Aufgabe zugrunde, eine gattungsgemäße Spannvorrichtung für einen Hülltrieb derart zu verbessern, daß bei Montage/Demontage des Zugmittels eines Hülltriebes die Spannvorrichtung ohne zusätzliche Werkzeuge und/oder Hilfsmittel außer Eingriff mit dem Zugmittel positionierbar ist.

Diese Aufgabe ist mit dem Patentanspruch dadurch gelöst, dass der Spannhebel und der über die Betätigungsstange angelenkte Kraftspeicher ein derart mittels eines Anschlages begrenzt durchschlagendes Kniehebelgetriebe bilden, dass das Spannteil über den Spannhebel außer Eingriff mit dem Zugmittel gesichert positionierbar ist.

Der Vorteil eines durch einen Anschlag begrenzt durchschlagenden Kniehebelgetriebes ist der selbstsichernde Effekt, so dass für ein aus der Spannposition durch einen einfachen Handgriff außer Eingriff mit dem Zugmittel gebrachtes Spannteil gesichert in dieser Position verbleibt und daß weiter nach Beendigung der Montage des Zugmittels durch eine weitere einfache Handhabung der Spannvorrichtung das Spannteil in Spannposition unter Mitwirkung des Kraftspeichers gebracht ist.

In weiterer Ausgestaltung der Erfindung ist der Spannhebel vorzugsweise derart einarmig ausgebildet, dass eine Lagerstelle für ein schwenk- oder drehbewegliches Spannteil und ein Schwenklager des Spannhebels sowie eine Anlenkstelle des Kraftspeichers bzw. der Betätigungsstange die Spitzen eines Dreiecks bilden, wobei die Verbindung zwischen Hebel-Schwenklager und Kraftspeicher-Anlenkstelle die kürzeste Dreieckseite ist.

Mit dieser Weiterbildung ist eine kompakt bauende Spannvorrichtung in vorteilhafter Weise erzielt, wobei weiter mit einem relativ kleinen Schwenkwinkel des Spannhebels ein großer Schwenkbereich des Spannteiles, insbesondere einer Rolle, erzielt ist und damit die Rolle bzw. das Spannteil deutlich außer Eingriff mit dem jeweiligen Zugmittel bringbar ist.

Nach einem weiteren Vorschlag kann die Erfindung auch mit einem zweiarmigen Spannhebel ausgeführt sein. Schließlich ist nach einem zusätzlichen Vorschlag der Anschlag zur Begrenzung des Durchschlagens des Kniehebelgetriebes vorzugsweise maschinenfest vorgesehen, der sich somit bei geringem Materialaufwand besonders steif ausbilden lässt.

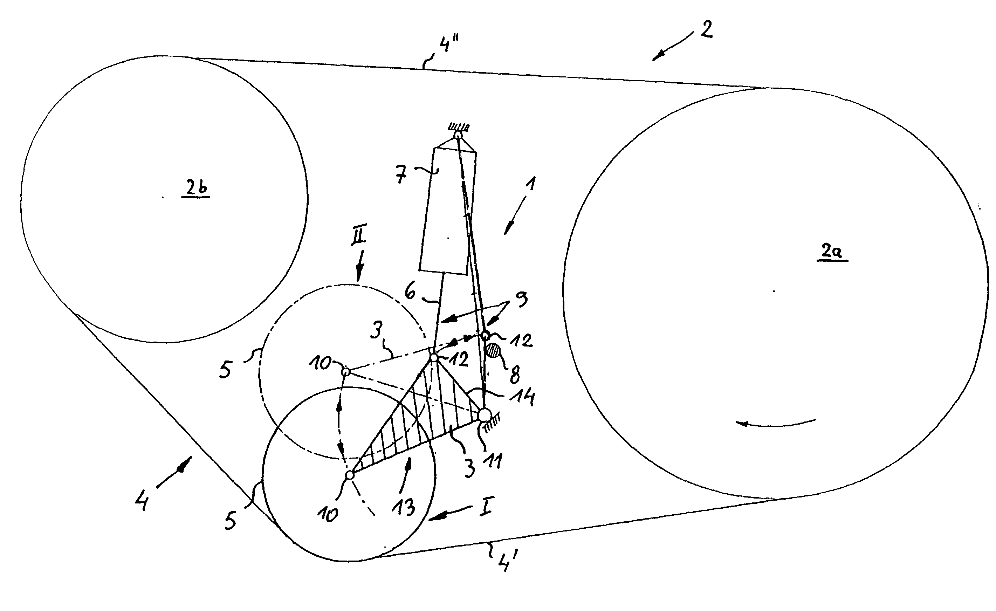

Die Erfindung ist anhand eines in der Zeichnung prinzipiell dargestellten Beispiels einer Spannvorrichtung beschrieben.

Eine Spannvorrichtung 1 für einen Hülltrieb 2 mit einem antreibenden Rad 2a und einem getriebenen Rad 2b, insbesondere Riementrieb für Nebenaggregate an Brennkraftmaschinen, umfasst einen maschinenfest schwenkbar angeordneten Spannhebel 3, der zur Einwirkung auf das Zugmittel 4 - Riemen oder Kette - im Leertrum-Abschnitt 4' des Hülltriebes 2 ein Spannteil 5 trägt, und der ferner mit einer Betätigungsstange 6 eines maschinenfest schwenkbar angeordneten Kraftspeichers 7 gelenkig verbunden ist.

Um bei einem Hülltrieb 2 das Zugmittel 4 ohne Behinderung durch das Spannteil 5 der Spannvorrichtung 1 auf den Rädern 2a und 2b montieren bzw. von diesen demontieren zu können, bilden erfindungsgemäß der Spannhebel 3 und der über die Betätigungsstange 6 angelenkte Kraftspeicher 7 ein derart mittels eines Anschlages 8 begrenzt durchschlagendes Kniehebelgetriebe 9, dass das beispielsweise als Rolle gestaltete Spannteil 5 über den Spannhebel 3 aus der spannenden Position I durch Hochdrücken von Hand außer Eingriff mit dem Zugmittel 4 bzw. dessen Verlauf gesichert in die Position II verlagert ist.

Mittels des bis zum Anschlag 8 durchschlagenden Kniehebelgetriebes 9 ist das Spannteil 5 in der Position II gesichert gehalten, und kann bei aufgelegtem Zugmittel 4 ohne Benutzung eines Werkzeuges von Hand aus der Position II in die SpannPosition I gebracht werden. Für eine kompakt bauende Spannvorrichtung I ist der Spannhebel 3 derart einarmig ausgebildet, daß eine Lagerstelle 10 für das schwenk- oder drehbewegliche Spannteil 5 - Rolle - und ein Schwenklager 11 des Spannhebels 3 sowie eine Anlenkstelle 12 des Kraftspeichers 7 bzw. der Betätigungsstange 6 die Spitzen eines Dreiecks 13 bilden, wobei die Verbindung zwischen Hebel-Schwenklager 11 und Kraftspeicher-Anlenkstelle 12 die kürzeste Dreieckseite 14 ist.

Weiter ist vorzugsweise der Anschlag 8 maschinenfest vorgesehen, der gegenüber einem am Kniehebelgetriebe 9 ausgebildeten, nicht gezeigten Anschlag von höherer Festigkeit ist.

Die Erfindung ist schließlich auch mit einem zweiarmigen Spannhebel zu realisieren.

Mit der Erfindung sind in vorteilhafter Weise sowohl die Montage als auch die Wartung vereinfacht durch den Entfall von Hilfsmitteln oder Hilfs-Werkzeugen, wobei der Wechsel des Spannteiles 5 zwischen den einzelnen Positionen I und II und umgekehrt leicht von Hand zu bewerkstelligen ist.

## Patentansprüche

1. Spannvorrichtung für einen Hülltrieb, insbesondere Riementrieb für Nebenaggregate an Brennkraftmaschinen,
- umfassend einen maschinenfest schwenkbar angeordneten Spannhebel (3), der
- zur Einwirkung auf das Zugmittel (4) des Hülltriebes (2) ein Spannteil (5) trägt, und der
- femer mit einer Betätigungsstange (6) eines maschinenfest schwenkbar angeordneten Kraftspeichers (7) gelenkig verbunden ist,
**dadurch gekennzeichnet,**
- **dass** der Spannhebel (3) und der über die Betätigungsstange (6) angelenkte Kraftspeicher (7) ein derart mittels eines Anschlages (8) begrenzt durchschlagendes Kniehebelgetriebe (9) bilden, dass
- das Spannteil (5) über den Spannhebel (3) außer Eingriff mit dem Zugmittel (4) gesichert positionierbar ist.

2. Spannvorrichtung nach Anspruch 1, **dadurch gekennzeichnet,**
- **dass** der Spannhebel (3) derart einarmig ausgebildet ist,
- **dass** eine Lagerstelle (10) für ein schwenk- oder drehbewegliches Spannteil (5) und ein Schwenklager (11) des Spannhebels (3) sowie eine Anlenkstelle (12) des Kraftspeichers (7) bzw. der Betätigungsstange (6) die Spitzen eines Dreiecks (13) bilden, wobei
- die Verbindung zwischen Hebel-Schwenklager (11) und Kraftspeicher-Anlenkstelle (12) die kürzeste Dreiecksseite (14) ist.

3. Spannvorrichtung nach Anspruch 1, **dadurch gekennzeichnet, dass** ein zweiarmiger Spannhebel vorgesehen ist.

4. Spannvorrichtung nach den Ansprüchen 1 bis 3, **dadurch gekennzeichnet, dass** der Anschlag (8) maschinenfest vorgesehen ist.

## Claims

1. A tension device for an encased drive, especially a belt drive for sub-units on internal combustion engines,
- comprising a pivotable tension lever (3) fastened to the engine and
- bearing a tension part (5) for acting on the traction means (4) of the encased drive (2), and
- also pivotably connected to an actuating rod (6) of a pivotable energy accumulator (7) fastened to the engine,
**characterised in that**
- the tension lever (3) and the energy accumulator (7) pivoted via the actuating rod (6) form a toggle mechanism (9) which folds to an extent limited by a stop (8), such that
- the tension part (5) can be positioned and secured by the tension lever (3) out of engagement with the traction means (4).

2. A tension device according to claim 1, **characterised in that**
- the tension lever (3) is one-armed, such that
- a bearing (10) for a pivotable or rotatable tension part (5) and a swivel bearing (11) of the tension lever (3) together with a pivot (12) of the energy accumulator (7) or actuating rod (6) form the apices of a triangle (13), wherein
- the connection between the swivel bearing (11) and the pivot (12) is the shortest side (14) of the triangle.

3. A tension device according to claim 1, **characterised in that** a two-armed tension lever is provided.

4. A tension device according to claims 1 to 3, **characterised in that** the stop (8) is fastened to the engine.

## Revendications

1. Dispositif tendeur pour un entraînement à organe flexible notamment pour une transmission à courroie pour des ensembles d'équipement auxiliaires prévus sur les moteurs à combustion interne, comprenant :
- un levier tendeur (3) basculant solidairement par rapport à la machine, qui
- agissant sur le moyen de traction (4) de la transmission à organe flexible sans fin (2), porte une pièce de tension (5), et
- est relié de manière articulée, en outre à une tige d'actionnement (6) d'un accumulateur de force (7) installé solidairement sur la machine, mais pouvant pivoter,
**caractérisé en ce que**
- le levier tendeur (3) et l'accumulateur de force (7) articulé sur la barre d'actionnement (6) forment une transmission à levier à genouillère (9) dont le passage est limité par une butée de passage (8), de sorte que
- la pièce de tension (5) est positionnée de manière protégée par le levier tendeur (3) hors de prise avec le moyen de traction (4).

2. Dispositif tendeur selon la revendication 1,
**caractérisé en ce que**
- le levier tendeur (3) est à un seul bras, de sorte que
- un point de palier (10) pour une pièce de tension (5) pivotante ou mobile en rotation et un palier pivotant (11) du levier tendeur (3) ainsi qu'un point d'articulation (12) de l'accumulateur de force (7) ou de la tige d'actionnement (6) forment les pointes d'un triangle (13),
- la liaison entre le palier pivotant de levier (13) et le point d'articulation accumulateur de force (12) correspondant au plus petit côté du triangle (14).

3. Dispositif tendeur selon la revendication 1,
**caractérisé par**
un levier de tension à deux bras.

4. Dispositif tendeur selon l'une des revendications 1 à 3,
**caractérisé en ce que**
la butée (8) est prévue fixe sur la machine.
